# EUROPÄISCHE PATENTSCHRIFT

(11) **EP 3 789 129 B1**
(45) Veröffentlichungstag und Bekanntmachung des Hinweises auf die Patenterteilung: **18.02.2026**
(21) Anmeldenummer: 20177168.0
(22) Anmeldetag: 28.05.2020
(51) Int. Cl.: B08B 9/20, B08B 9/42, B08B 13/00, G01D 21/00

(54) **VERFAHREN UND VORRICHTUNG ZUM ÜBERWACHEN DES BETRIEBS EINER BEHÄLTERREINIGUNGSMASCHINE**
METHOD AND APPARATUS FOR MONITORING THE OPERATION OF A CONTAINER CLEANER
PROCÉDÉ ET APPAREIL DE SURVEILLANCE DU FONCTIONNEMENT D'UNE MACHINE DE NETTOYAGE DES RÉCIPIENTS

(30) Priorität: 05.09.2019 DE 102019123765
(43) Veröffentlichungstag der Anmeldung: 10.03.2021
(73) Patentinhaber: KRONES AG, 93073 Neutraubling (DE)
(72) Erfinder: Siegmund, Michael, 93073 Neutraubling (DE); Haase, Arne, 93073 Neutraubling (DE)
(74) Vertreter: Grünecker Patent- und Rechtsanwälte PartG mbB

(56) Entgegenhaltungen:
- EP-A1- 1 281 446
- WO-A2-2019/002047
- DE-C1- 4 237 207
- DE-U1- 9 411 481

## Beschreibung

Die vorliegende Erfindung betrifft ein Verfahren zum Überwachen des Betriebs einer Behälterreinigungsmaschine gemäß Anspruch 1 sowie eine Behälterreinigungsmaschine gemäß Anspruch 11.

### Stand der Technik

Behälterreinigungsmaschinen sind aus dem Stand der Technik hinreichend bekannt. So ist es üblich, für die mehrfache Verwendung gedachte Behälter, wie Flaschen oder Dosen, vor weiteren Behandlungsschritten, wie beispielsweise dem erneuten Befüllen oder dem Aufbringen neuer Etiketten in Behälterreinigungsmaschinen zu reinigen. In diesen Behälterreinigungsmaschinen kann beispielsweise entsprechend der WO2019/002047A2 durch eine oder mehrere Düsen ein Reinigungsmedium auf die Behälter, deren Behälterträgern beispielsweise kopfüber transportiert werden, aufgebracht werden. Es ist auch bekannt, die Behälter durch eine Reihe von aufeinanderfolgenden Reinigungsbädern zu führen, in denen beispielsweise Verunreinigungen oder andere unerwünschte Beläge auf oder in den Flaschen entfernt werden.

Die Behälter werden dabei üblicherweise von Behälterträgern (entsprechend Behälteraufnahmen) in einer Reihe von Gassen, beispielsweise parallel zueinander, durch die Behälterreinigungsmaschine von einem Einlauf der Behälterreinigungsmaschine (in den die Behälter beispielsweise mittels eines Massentransporteurs ungeordnet zugeführt werden können) zu einem Auslauf der Behälterreinigungsmaschine transportiert und, während sie in diesen Behälterträgern durch die Behälterreinigungsmaschine transportiert werden, werden die Behälter gereinigt.

Einige Reinigungseinrichtungen, wie etwa Düsen zum Aufbringen oder Entfernen von Reinigungsmedien, können dabei für jede der Gassen separat (individuell) vorgesehen sein. Während des Betriebs kann es dabei auch zu Ausfällen von einem oder mehreren dieser Reinigungseinrichtungen kommen.

Überdies ist eine Sensoreinrichtung bekannt, die etwa die Form eines Behälters haben, und durch eine Behälterreinigungsmaschine transportiert werden kann, um beispielsweise die Leistung der Maschine zu messen. Auch andere Parameter wie Temperatur und Leitfähigkeit können in Abhängigkeit von der Zeit gemessen werden. Diese Sensoreinheit erlaubt eine punktuelle Überwachung des Betriebs der Behälterreinigungsmaschine.

Dies erfordert jedoch ein gesondertes Einbringen dieser Sensoreinheit in die Behälterreinigungsmaschine, was letztlich dem Bediener der Behälterreinigungsmaschine überlassen wird. Damit besteht die Gefahr, dass eine Überwachung nur unregelmäßig folgt.

Aus der DE 42 37 207 C1 ist bekannt, an einem Kettenförderer einer Behälterreinigungsmaschine ein Inspektionssystem vorzusehen.

Ferner ist aus der EP 1 281 446 A1 eine Messvorrichtung zur Überwachung der Reinigung von Behältern beim Durchlauf durch eine Waschanlage bekannt, bei der die Messvorrichtung als ein mit einem Temperatursensor ausgestatteter Dummy-Behälter ausgebildet ist, welcher Dummy-Behälter zusammen mit den mit Reinigungswasser zu reinigenden Behältern durch die Waschanlage geführt werden. Die Messvorrichtung ist dadurch gekennzeichnet, dass der Dummy-Behälter Mittel umfasst, die im Gebrauch das Vorhandensein aller Arten von Substanzen im Reinigungswasser bestimmen.

Aus dem Dokument WO 2019/002047 A2 ist ein Verfahren gemäß dem Oberbegriff von Anspruch 1 bekannt.

### Aufgabe

Ausgehend von bekanntem Stand der Technik besteht die zu lösende technische Aufgabe somit darin, ein zuverlässiges Verfahren zum Überwachen des Betriebs einer Behälterreinigungsmaschine anzugeben.

### Lösung

Diese Aufgabe wird erfindungsgemäß durch das Verfahren zum Überwachen des Betriebs einer Behälterreinigungsmaschine gemäß Anspruch 1 sowie die Behälterreinigungsmaschine zum Reinigung von Behältern gemäß Anspruch 11 gelöst. Vorteilhafte Weiterbildungen der Erfindung sind in den Unteransprüchen erfasst.

Das erfindungsgemäße Verfahren zum Überwachen des Betriebs einer Behälterreinigungsmaschine, wobei die Behälterreinigungsmaschine mehrere Behälter gleichzeitig von einem Einlauf zu einem Auslauf der Behälterreinigungsmaschine mit Hilfe von Behälterträgern, die jeweils wenigstens einen Behälter aufnehmen, in mehreren im wesentlichen parallel zueinander verlaufenden Gassen transportiert, umfasst, dass während des Betriebs der Behälterreinigungsmaschine zu jeder Zeit wenigstens zwei Sensoreinheiten in Behälterträgern in verschiedenen Gassen durch die Behälterreinigungsmaschine transportiert werden und wobei die Sensoreinheiten Umgebungsdaten und/oder Betriebsdaten innerhalb der Behälterreinigungsmaschine überwachen, wobei die Sensoreinheiten mit Mitteln zur Datenübertragung die Umgebungsdaten und/oder der Betriebsdaten an eine Auswerteinrichtung übertragen, die die Umgebungsdaten und/oder die Betriebsdaten auswertet.

Dass während des Betriebs zu jeder Zeit wenigstens zwei Sensoreinheiten in Behälterträgern in verschiedenen Gassen durch die Behälterreinigungsmaschine transportiert werden, bedeutet, dass sich diese zwei Sensoreinheiten in unterschiedlichen Behälterträgeren und diese sich in unterschiedlichen Gassen befinden, also eine erste Sensoreinheit in einer ersten Gasse und eine zweite Sensoreinheit in einer zweiten Gasse. Überdies ist dies bevorzugt so zu verstehen, dass sich wenigstens zwei Sensoreinheiten stets zwischen dem Einlauf und dem Auslauf der Behälterreinigungsmaschine in Behälterträgern befinden. Dies müssen nicht stets dieselben zwei Sensoreinheiten sein. Beispielsweise können auch drei Sensoreinheiten oder mehr durch die Behälterreinigungsmaschine transportiert werden, wobei dann beispielsweise eine erste Sensoreinheit die Behälterreinigungsmaschine durch den Auslauf verlässt, während zum selben Zeitpunkt oder bereits früher eine zweite Sensoreinheit und eine dritte Sensoreinheit in die Behälterreinigungsmaschine über den Einlauf eingebracht wurden.

Das erfindungsgemäße Verfahren erlaubt eine zuverlässige Überwachung von Umgebungsdaten und Betriebsdaten auch in den grundsätzlich voneinander unabhängigen Gassen der Behälterreinigungsmaschinen, was etwaige Fehleinschätzungen bezüglich des Betriebs der Behälterreinigungsmaschine vermeidet und vollständige Informationen über den Betrieb der Behälterreinigungsmaschine sicherstellt.

Die Sensoreinheiten können in Form und/oder Gewicht den mit der Behälterreinigungsmaschine gereinigten Behältern entsprechen.

Auf üblicherweise in der Behälterreinigungsmaschine wirkende Kräfte und Umwelteinflüsse wirken so in gleicher Weise auch auf die Sensoreinheit, was eine zuverlässige Beurteilung des Betriebs ermöglicht.

Es kann auch vorgesehen sein, dass zu jeder Zeit in einem Behälterträger jeder Gasse eine Sensoreinheit durch die Behälterreinigungsmaschine transportiert wird.

Hiermit ist eine vollständige Überwachung des Betriebs der gesamten Behälterreinigungsmaschine möglich.

In einer Weiterbildung dieser Ausführungsform werden die Sensoreinheiten in unmittelbar benachbarten Behälterträgern und somit entlang einer Linie senkrecht zur Transportrichtung durch die Behälterreinigungsmaschine transportiert oder die Sensoreinheiten werden in Transportrichtung durch die Behälterreinigungsmaschine mit einem Abstand zueinander transportiert. Geringfügige zeitliche Veränderungen, beispielsweise in den pH-Werten von Reinigungsbädern, können so erfasst werden, wobei dennoch eine Überwachung des Betriebs jeder einzelnen Gasse sichergestellt wird.

Weiterhin können die Sensoreinheiten mit Mitteln zur Datenübertragung die Umgebungsdaten und/oder der Betriebsdaten an die Auswerteinrichtung übertragen, die die Umgebungsdaten und/oder die Betriebsdaten auswertet und abhängig von der Auswertung den Betrieb einer Gasse unterbricht.

Dabei wird der Betrieb einer Gasse dann unterbrochen, wenn die Auswertung der Umgebungsdaten und/oder der Betriebsdaten zeigt, dass diese beispielsweise nicht mit vorgegebenen Werten für die Umgebungsdaten und/oder Betriebsdaten übereinstimmen. Ist beispielsweise die Temperatur innerhalb der Behälterreinigungsmaschine zu niedrig (oder im Bereich einer einzelnen Gasse zu niedrig), verglichen mit einem vorgegebenen Sollwert, so kann der Betrieb dieser Gasse gestoppt werden.

In einer Ausführungsform umfasst das Unterbrechen des Betriebs einer Gasse das Sperren des Einlaufs der Behälterreinigungsmaschine für diese Gasse.

Mit dieser Variante wird sichergestellt, dass nicht versehentlich weitere Behälter in die ansonsten gesperrte Gasse einlaufen, was Beschädigungen der Maschine, aber auch unzureichende Reinigung dieser Behälter vermeiden kann.

Es kann auch vorgesehen sein, dass die Sensoreinheiten zur Energieversorgung einen Akkumulator umfassen, wobei der Akkumulator zumindest zeitweise während des Transports der Sensoreinheit durch die Behälterreinigungsmaschine durch ein Mittel zum induktiven Aufladen des Akkumulators aufgeladen wird.

Mit dieser Ausführungsform können die Sensoreinheiten im Wesentlichen kontinuierlich verwendet werden, ohne dass sie ausgetauscht werden müssen. Die Anzahl gleichzeitlich notwendiger Sensoreinheiten kann so möglichst gering werden.

Alternativ kann vorgesehen sein, dass eine Sensoreinheit in den Einlauf der Behälterreinigungsmaschine eingeschleust wird und im Auslauf der Behälterreinigungsmaschine ausgeschleust wird, wobei die ausgeschleuste Sensoreinheit eine Wartungseinheit zugeführt wird, bevor die Sensoreinheit wieder in den Einlauf der Behälterreinigungsmaschine eingeschleust wird und wobei die Wartungseinheit Umgebungsdaten und/oder Betriebsdaten aus der Sensoreinheit ausliest und/oder einen Akkumulators der Sensoreinheit auflädt und/oder einen Speicher der Sensoreinheit leert.

Probleme, die beispielsweise bei der Datenübertragung durch die Behälterreinigungsmaschine hindurch entstehen können oder die beim induktiven Aufladen von Akkumulatoren der Sensoreinheiten im Bereich der Behälterreinigungsmaschine auftreten könnte, können so vermieden werden.

Ferner können die Umgebungsdaten wenigstens eines von Temperatur, Feuchtigkeit, pH-Wert, Leitwert, Luftzusammensetzung umfassen und die Betriebsdaten können wenigstens eines von Aktivität einer Düse, Füllstand eines Reinigungsbeckens der Behälterreinigungsmaschine, Ausbringdruck einer Reinigungsflüssigkeit aus einer Reinigungsdüse der Behälterreinigungsmaschine umfassen.

Diese Umgebungsdaten und/oder Betriebsdaten sind besonders geeignet, um eine Überwachung des Betriebs der Behälterreinigungsmaschine zu gewährleisten.

Auch können die Behälterreinigungsmaschine wenigstens 8 oder wenigstens 10 oder wenigstens 12 Gassen umfassen.

Die Erfindung kann so auf gängige Behälterreinigungsmaschinen angewandt werden.

Die erfindungsgemäße Behälterreinigungsmaschine zum Reinigen von Behältern umfasst einen Einlauf und einen Auslauf und eine Vielzahl von Behälterträgern, die in zueinander im wesentlichen parallelen Gassen durch die Behälterreinigungsmaschine vom Einlauf zum Auslauf bewegt werden können, und wenigstens zwei Sensoreinheiten, wobei die Behälterträger ausgebildet sind, Behälter und Sensoreinheiten aufzunehmen, wobei die Behälterreinigungsmaschine eine Auswerteinrichtung zum Auswerten von mittels einer der Sensoreinheiten gewonnenen Umgebungsdaten und/oder Betriebsdaten umfasst, und wobei die Behälterreinigungsmaschine ausgebildet ist, in Zusammenwirkung mit Sensoreinheiten das Verfahren nach einer der vorangegangenen Ausführungsformen durchzuführen. Mit dieser Behälterreinigungsmaschine kann ein zuverlässiger Betrieb durch zuverlässige Überwachung des Betriebs der Behälterreinigungsmaschine sichergestellt werden.

Hier kann ferner vorgesehen sein, dass die Auswerteinrichtung ausgebildet ist, eine Gasse abhängig von der Auswertung der Umgebungsdaten und/oder Betriebsdaten zu sperren.

Mit dieser Auswerteinrichtung kann auf sich verändernde Umgebungsdaten und/oder Betriebsdaten, die beispielsweise auf eine Fehlfunktion der Behälterreinigungsmaschine hindeuten, entsprechend reagiert werden, um unzureichende Reinigungsergebnisse oder gar Beschädigungen von Behältern zu vermeiden.

Weiterhin kann die Behälterreinigungsmaschine eine Wartungseinheit zum Aufnehmen einer Sensoreinheit umfassen, wobei die Wartungseinheit Umgebungsdaten und/oder Betriebsdaten aus einer Sensoreinheit auslesen und/oder einen Akkumulators der Sensoreinheit aufladen und/oder einen Speicher der Sensoreinheit leeren kann.

Mit dieser Einrichtung wird ein zuverlässiges Handhaben der Sensoreinheiten gewährleistet.

Die Behälterreinigungsmaschine kann wenigstens 8 oder wenigstens 10 oder wenigstens 12 Gassen umfassen.

Diese Ausführungsformen entsprechen den gängigen Behälterreinigungsmaschinen, die so vorteilhaft mit der Erfindung überwacht werden können.

In einer Weiterbildung dieser Ausführungsform ist vorgesehen, dass die Gassen parallel verlaufen und vom Einlauf bis zum Auslauf auf derselben oder auf verschiedenen Höhen verlaufen.

Hiermit wird die Erfindung auch auf übliche Behälterreinigungsmaschinen, die linear arbeiten oder die auf unterschiedlichen Höhenniveaus arbeiten, anwendbar.

### Kurze Beschreibung der Figuren

- Figur 1: zeigt eine Behälterreinigungsmaschine in Draufsicht gemäß einer Ausführungsform
- Figur 2a + b: zeigen verschiedene Ausführungsformen für das Führen von Sensoreinheiten durch die Behälterreinigungsmaschine
- Figur 3: zeigt eine Ausführungsform eines Behälterträgers, wie er in der Behälterreinigungsmaschine zum Einsatz kommen kann, mit einer darin angeordneten Sensoreinheit

### Ausführliche Beschreibung

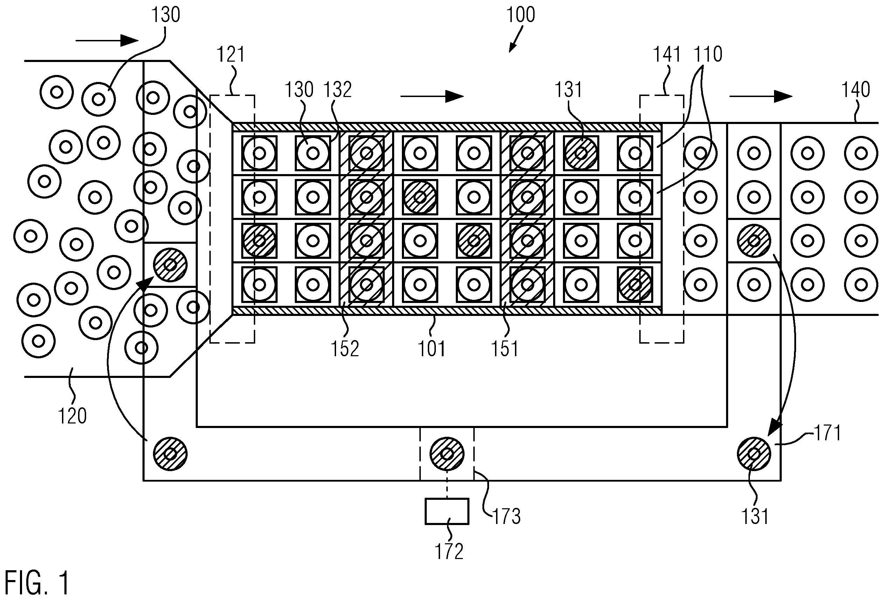

Figur 1 zeigt eine Behälterreinigungsmaschine 100 zum Reinigen von Behältern, wie Flaschen oder Dosen 130. In der hier dargestellten Ausführungsform ist die Behälterreinigungsmaschine als eine linear arbeitende Behälterreinigungsmaschine ausgebildet. Dies bedeutet insbesondere, dass die Behälter im Wesentlichen in einer horizontalen Ebene ohne Änderungen in der vertikalen Höhe entsprechend den dargestellten Pfeilrichtungen von links nach rechts (in der hier dargestellten Ausführungsform) durch die Behälterreinigungsmaschine transportiert werden. Diese Ausführungsform ist so nicht zwingend und auch nicht beschränkend zu verstehen. Aus dem Stand der Technik sind Beispiele bekannt, bei denen Behälterreinigungsmaschinen über unterschiedliche Höhenniveaus verlaufen und auch diese Varianten sollen gleichsam von der Erfindung umfasst sein.

In der in Figur 1 dargestellten Ausführungsform umfasst die Behälterreinigungsmaschine 100 einen Einlauf 121, in dem die Behälter in einen Reinigungsbereich 101 der Behälterreinigungsmaschine eingebracht werden können. Die Behälter können diesem Einlauf 121 beispielsweise über ein Massentransporteur 120, der eine Vielzahl von Behältern stehend in ungeordneter Weise transportiert, zugeführt werden. Alternativ kann auch ein geordneter Transport der Behälter, beispielsweise in einer Reihe von aneinander abgegrenzten Gassen, zum Einlauf 121 erfolgen. Im Bereich des Einlaufs 121 werden die Behälter 130 dann in Behälterträger 132 aufgenommen, die die Behälter 130 dann durch den Reinigungsbereich 101 der Behälterreinigungsmaschine transportieren können. Dies geschieht bevorzugt in einer Reihe von Gassen 110, die, wie hier dargestellt, im Wesentlichen parallel zueinander verlaufen und in denen eine Reihe von Behälterträgern von dem Einlauf 121 in Richtung eines Auslaufs 141 bewegt werden. Es versteht sich, dass zumindest für die Behälterträger 132 auch eine Rückführung (hier nicht dargestellt) gedacht ist, so dass die Behälterträger von dem Auslauf 143, an dem sie die Behälter 130 nach der Reinigung im Reinigungsbereich 101 an eine weitere Transporteinrichtung 140 übergeben können, wieder zum Einlauf 121 bewegt werden. Dies kann beispielsweise so erreicht werden, dass die Behälterträger auf einer Kette oder einer Reihe von Ketten angeordnet sind, die durch die Behälterreinigungsmaschine umlaufend verlaufen und so die Behälterträger vom Einlauf zum Auslauf wieder zurücktransportieren können.

Während die Gassen in der hier dargestellten Ausführungsform parallel gezeigt sind und auch im selben Höhenniveau verlaufen, kann auch vorgesehen sein, dass die Gassen 110 beispielsweise zwar in derselben horizontalen Ebene, jedoch nicht parallel oder nicht perfekt parallel zueinander verlaufen. Alternativ oder zusätzlich kann auch vorgesehen sein, dass die Gassen teilweise auf unterschiedlichen Höhenniveaus relativ zueinander verlaufen, so dass beispielsweise eine erste Gasse auf einem ersten Höhenniveau durch die Behälterreinigungsmaschine verläuft und eine zweite Gasse auf einem zweiten Höhenniveau durch die Behälterreinigungsmaschine verläuft.

Die bereits erwähnte Transporteinrichtung 140 kann die Behälter aus dem Auslauf der Behältereinigungsmaschine und insbesondere aus dem Reinigungsbereich 101 übernehmen und weitertransportieren. Die Erfindung ist hinsichtlich dieser Transporteinrichtung nicht beschränkt und es kann sich beispielsweise ebenfalls um einen Massentransporteur oder um eine Transporteinrichtung zum geordneten Transport der Behälter handeln. Hier sind insbesondere auch Transporteinrichtungen in Form von Förderbändern und auch Transporteinrichtungen in Form von Halteeinrichtungen zum Halten einzelner Behälter und Transportieren dieser Behälter (wie beispielsweise neck-handling) denkbar.

Im Reinigungsbereich umfasst die Behälterreinigungsmaschine eine Reihe von Reinigungseinrichtungen 151 und 152. Die Erfindung ist diesbezüglich und insbesondere hinsichtlich der technischen Komponenten, die für die Reinigung der Behälter verwendet werden, nicht beschränkt. Es sind jedoch eine Reihe von Reinigungseinrichtungen aus dem Stand der Technik bereits bekannt, die entweder eine kollektive Reinigung mehrerer Behälter ermöglichen oder eine individuelle Reinigung von Behältern bewirken.

Unter die Gruppe der kollektiv wirkenden Reinigungseinrichtungen fallen beispielsweise Reinigungsbäder, die eine gewisse Ausdehnung besitzen und in die die Behälter eingeführt werden können, wobei beispielsweise 100 Behälter gleichzeitig in ihren jeweiligen Behälterträgern und den jeweiligen Gassen durch ein solches Reinigungsbad geführt werden können. Individuell arbeitende Reinigungseinrichtungen sind beispielsweise Sprühdüsen, die den Innenraum des Behälters durch Beaufschlagen des Innenraums des Behälters mit einer Reinigungsflüssigkeit reinigen können. Diese Einrichtungen arbeiten individuell, da damit zwar der Innenraum eines Behälters gereinigt wird, der Innenraum eines anderen Behälters damit jedoch nicht gleichzeitig gereinigt werden kann.

Es ist diesbezüglich auch bekannt, eine Reihe von verschiedenen Reinigungsmedien zu verwenden, wie beispielsweise Laugenbäder oder Säurebäder oder Bäder, die fettlösende Eigenschaften besitzen. Auch Wasser kann hier ohne Zusatz von basischen oder sauren Bestandteilen genutzt werden, um beispielsweise die Überreste der Reinigungsmedien von den Behältern zu entfernen, bevor diese die Behälterreinigungsmaschine verlassen.

Die Erfindung ist diesbezüglich nicht beschränkt.

Überdies ist es bekannt, in der Behälterreinigungsmaschine bestimmte Bestimmungen zu realisieren, wie beispielsweise eine bestimmte Luftfeuchtigkeit insgesamt oder eine bestimmte Temperatur. Beispielsweise kann in dem Reinigungsbereich der Behälterreinigungsmaschine konstant eine Temperatur von bis zu 90 Grad herrschen, oder zumindest in einer Reihe von Reinigungsbädern oder in wenigstens einem Reinigungsbad oder in einem Klarwasser-Bad kann eine erhöhte Temperatur von beispielsweise 50 oder 90 Grad herrschen. Auch Reinigungsmedien oder Wasser, mit dem Behälter individuell beaufschlagt werden, kann eine erhöhte Temperatur aufweisen.

Alternativ dazu ist es auch denkbar, besonders gekühlte Reinigungsmedien zu verwenden oder Behälter nach Durchlauf eines mit erhöhter Temperatur betriebenen Reinigungsbades oder einer entsprechenden Reinigungsdüse mit einem kälteren Medium zu beaufschlagen, um die Temperatur der Behälter erneut zu reduzieren.

Wie bereits erwähnt, ist die Erfindung diesbezüglich nicht beschränkt und sie kann im Zusammenhang mit jeglicher Behälterreinigungsmaschine, die eine irgendwie geartete Reinigung der Behälter durchführt, kombiniert werden.

Erfindungsgemäß ist vorgesehen, dass während des Betriebs der Behälterreinigungsmaschine im Reinigungsbereich, also in dem Bereich der Behälterreinigungsmaschine zwischen dem Einlauf 121 und dem Auslauf 141 zu jeder Zeit wenigstens zwei Sensoreinheiten 131 in entsprechenden Behälterträgern 132 transportiert werden, wobei die Sensoreinheiten so ausgebildet sind, dass sie Daten über die Umgebung (Umgebungsdaten) beispielsweise im Bereich des Reinigungsbereichs 101 und/oder Betriebsdaten der Behälterreinigungsmaschine sammeln. Diese Daten können dann genutzt werden, um den Betrieb der Behälterreinigungsmaschine zu überwachen.

Dabei ist vorgesehen, dass die wenigstens zwei Sensoreinheiten 131 in Behälterträgern verschiedener Gassen transportiert werden. Dies bedeutet, dass eine Sensoreinheit 131 in einem Behälterträger 132 einer ersten Gasse transportiert wird und gleichzeitig eine zweite Sensoreinheit 132 durch eine zweite Gasse, die von der ersten Gasse verschieden ist, transportiert wird.

Dabei kann auch vorgesehen sein, dass insbesondere zu jeder Zeit des Betriebs der Behälterreinigungsmaschine in jeder Gasse wenigstens eine Sensoreinheit transportiert wird.

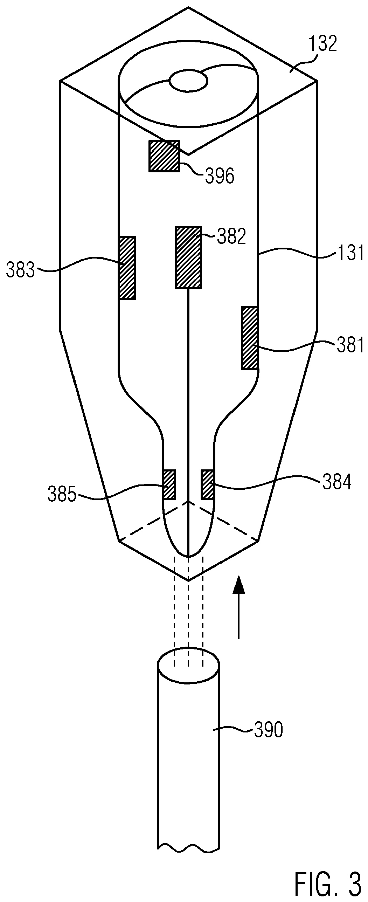

Die Sensoreinheiten werden hinsichtlich ihrer Ausführung genauer in der Figur 3 beschrieben. Sie verfügen in jedem Fall grundsätzlich über Sensoren, die die Umgebung betreffende Werte, beispielsweise Temperatur, Druck, Luftfeuchte, pH-Wert, Leitwert, Zusammensetzung der Luft wie etwa auch der H₂-Gehalt, messen können und/oder sie verfügen über Sensoren, die Betriebsdaten der Behälterreinigungsmaschine, wie etwa die Ausbringung von Reinigungsmedien durch eine bestimmte Reinigungsdüse oder das Nicht-Ausbringen durch diese Reinigungsdüse messen können.

Die Sensoreinheiten können dabei insbesondere **in** Form, Gewicht und Oberflächenstruktur oder anderen Eigenschaften, denen der mit der Behälterreinigungsmaschine zu reinigenden Behältern entsprechend oder gleichen. Insbesondere können sie beispielsweise die Form einer Flasche aufweisen, wenn die mit der Behälterreinigungsmaschine 100 zu reinigenden Behälter 130 Flaschen sind.

Jedoch ist in einer Ausführungsform nicht vorgesehen, dass diese Sensoreinheiten im weiteren Verlauf der Behandlung der Behälter nach Verlassen der Behälterreinigungsmaschine 100 noch mit den Behältern zusammen transportiert werden, da dies zu Beschädigungen an weiteren Behälterbehandlungsmaschinen, wie beispielsweise Etikettiermaschinen oder Druckmaschinen oder Füllern, oder zu Beschädigungen der Sensoreinheiten führen kann.

Aus diesem Grund kann beispielsweise vorgesehen sein, dass die Sensoreinheiten in den entsprechenden Behälterträgern festmontiert sind. Alternativ kann auch vorgesehen sein, dass die Sensoreinheiten 131 zwar von den Behälterträgern aufgenommen und von diesen auch abgegeben werden können (beispielsweise im Einlauf 121 aufgenommen und im Auslauf 141 abgegeben werden), jedoch eine entsprechende Transporteinrichtung 171 vorgesehen ist, die beispielsweise über einen Greifer verfügt, der eine Sensoreinheit aus der Transporteinrichtung 140 entnehmen kann und die weiterhin über einen Greifer verfügen kann, der eine Sensoreinheit 131 der Transporteinrichtung 120 stromauf des Einlaufs 120 übergeben kann. Mit dieser Transporteinrichtung 171 kann dann sichergestellt werden, dass Sensoreinheiten, die die Behälterreinigungsmaschine verlassen, dieser wieder zugeführt werden. Allerdings kann diese Ausführungsform dazu führen, dass die Verteilung der Sensoreinheiten in den Gassen im Reinigungsbereich 101 der Behälterreinigungsmaschine 100 nicht gezielt, sondern zufällig erfolgt, beispielsweise abhängig davon, wie die Sensoreinheit durch den Massentransporteur 120 zum Einlauf 121 gelangt. Dies kann jedoch vorteilhaft sein, da so beispielsweise zufällig periodisch auftretende Fehlfunktionen der Behälterreinigungsmaschine durch die statistische Verteilung der Sensoreinheiten besser erkannt werden können, als wenn auch die Verteilung der Sensoreinheiten in den einzelnen Gassen 110 der Behälterreinigungsmaschine 100 stets nach dem gleichen Muster und insbesondere periodisch erfolgen würde.

Erfindungsgemäß wird eine Auswerteinrichtung 172 als Teil der Behälterreinigungsmaschine bereitgestellt. Diese Auswerteinrichtung kann beispielsweise über drahtlose oder kabelgestützte Verbindung mit einer oder mehreren Sensoreinheiten zum Zwecke eines Datenaustausches in Kontakt treten, um von der jeweiligen Sensoreinheit die Umgebungsdaten und/oder die Betriebsdaten zu erhalten. Weiterhin ist diese Auswerteinrichtung dazu ausgebildet, die Betriebsdaten und/oder Umgebungsdaten auszuwerten. Diese Auswertung kann beispielsweise darin bestehen, dass die gewonnenen Umgebungsdaten und/oder Betriebsdaten in einem Speicher mit der entsprechenden Zeit ihrer Aufnahme und/oder mit einer Zuordnung zu der entsprechenden Sensoreinheit und dementsprechend gegebenenfalls auch einer Zuordnung der Gasse und des Behälterträgers, in dem diese Daten gewonnen wurden, gespeichert werden. Zusätzlich oder alternativ kann die Auswertung auch darin bestehen, dass die gewonnenen Umgebungsdaten und/oder Betriebsdaten weiter manipuliert werden, indem beispielsweise mathematische Operationen mit ihnen durchführt werden. Dies ist jedoch nicht zwingend.

Zusätzlich kann vorgesehen sein, dass etwa ein Vergleich mit für die Umgebungsdaten und/oder die Betriebsdaten vorgesehenen Sollwerten erfolgt. Beispielsweise kann eine bestimmte Temperatur im Reinigungsbereich 101 der Behälterreinigungsmaschine vorgegeben sein, die sicherstellt, dass eine Desinfektion und/oder zuverlässige Reinigung der Behälter erfolgt. Diese Temperatur kann beispielsweise bei 90°C liegen. Stellt die Auswerteinrichtung bei Auswertung der durch die Sensoreinheit gemessenen Temperatur fest, dass die gemessene Temperatur von der Solltemperatur von beispielsweise 90° abweicht (beispielsweise auch unter Berücksichtigung einer gewissen Toleranz), kann die Auswerteinrichtung so ausgebildet sein, dass sie entweder den Betrieb der gesamten Behälterreinigungsmaschine oder zumindest den Betrieb der Gasse, in der die ausgewertete Sensoreinheit die entsprechende Temperatur gemessen hat, unterbricht.

Dies bedeutet, dass die Behälterreinigung der Behälter in dieser Gasse nicht fortgeführt wird, bis beispielsweise durch einen Bediener das erkannte Problem, das die Ursache für die Abweichung der Temperatur von der vorgegebenen Temperatur ist, behoben wurde und die Auswerteinrichtung den Betrieb wieder freigibt.

Natürlich können auch andere Umgebungsdaten und/oder Betriebsdaten zu einer solchen Unterbrechung des Betriebs aller Gassen oder der gesamten Behälterreinigungsmaschine führen.

Insbesondere kann vorgesehen sein, dass die Auswerteinrichtung den gesamten Betrieb der Behälterreinigungsmaschine unterbricht, wenn Umgebungsdaten und/oder Betriebsdaten darauf hindeuten, dass eine kollektiv arbeitende Reinigungseinrichtung eine Fehlfunktion aufweist (beispielsweise ein Reinigungsbecken) und/oder es kann vorgesehen sein, dass die Auswerteinrichtung lediglich den Betrieb einer bestimmten Gasse unterbricht, wenn eine dieser Gasse speziell zugeordnete beispielsweise individuell arbeitende Reinigungseinrichtung (wie etwa eine Düse zum Ausbringen eines Reinigungsmediums zum Reinigen des Innenraums eines Behälters) eine Fehlfunktion aufweist. In letzterem Fall sind die übrigen Gassen nicht betroffen, sodass deren Betrieb fortgesetzt werden kann und das Unterbrechen lediglich des Betriebs dieser einen Gasse vorteilhaft die Weiterführung des Betriebs der Behälterreinigungsmaschine und damit die Reduktion von kompletten Stillstandszeiten gewährleistet.

Weiterhin kann das Unterbrechen des Betriebs der Behälterreinigungsmaschine und/oder der Gasse auch umfassen, dass eine vollständige Unterbrechung der Zufuhr von Behältern über den Einlauf 120 der Behälterreinigungsmaschine erfolgt. Beispielsweise kann eine physische Barriere im Behältereinlauf positioniert werden, so dass Behälter von der Transporteinrichtung 120 nicht mehr in den Behältereinlauf eindringen können oder die Bewegung der Behälter in der Transporteinrichtung kann durch Anhalten des Förderbandes oder übrige Einrichtungen zum Transport der Behälter angehalten werden.

Weiterhin kann die Behälterreinigungsmaschine Mittel umfassen, die beispielsweise ein Aufladen eines Akkumulators der Sensoreinheit 131 bewirken können. Dabei kann es sich beispielsweise um induktive Mittel handeln, die insbesondere beim permanenten Mitführen der Sensoreinheiten 131 in entsprechenden Behälterträgern 132 zum Einsatz kommen können und etwa im Reinigungsbereich 101 oder im Bereich, in dem die Behälterträger vom Auslauf 141 zum Einlauf 121 zurückgeführt werden, angeordnet sind. Die induktive Aufladung der Akkumulatoren kann beispielsweise durch bestimmte elektromagnetische Felder erfolgen.

Alternativ kann auch vorgesehen sein, dass etwa in der Transporteinrichtung 171 oder in einem Bereich, in den die Sensoreinheiten 131 überführt werden können, eine Wartungseinheit angeordnet ist. Diese Wartungseinheit kann beispielsweise dazu ausgebildet sein, die Umgebungsdaten und/oder Betriebsdaten aus der Sensoreinheit auszulesen (und sie etwa der Auswerteinrichtung zuzuführen oder sie in einem Speicher zu speichern) und/oder sie kann so ausgebildet sein, dass sie ein Aufladen der Sensoreinheit gewährleistet. Beispielsweise kann die Wartungseinheit mit Hilfe einer Steckverbindung oder Kabelverbindung oder anderer geeigneter Verbindung einen Akkumulator der Sensoreinheit mit Strom zum Aufladen des Akkumulators versorgen. Zusätzlich oder alternativ kann vorgesehen sein, dass diese Wartungseinheit eine Überprüfung der Sensoreinheit auf Fehler hin (beispielsweise durch Testen der Sensoren) ermöglicht. Alternativ oder zusätzlich kann ferner vorgesehen sein, dass diese Wartungseinheit den Speicher der Sensoreinheit etwa in regelmäßigen Abständen leert, um Platz für neue Daten zu schaffen.

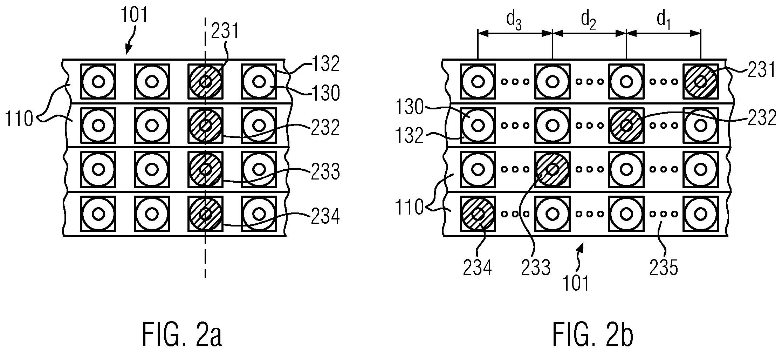

In Figur 2 sind verschiedene Ausführungsformen für den Transport der Sensoreinheiten durch den Reinigungsbereich 101 oder allgemein durch die Behälterreinigungsmaschine 100 dargestellt. In der Figur 2a werden die Sensoreinheiten 231 bis 234 auf einer Linie, die senkrecht zur Transportrichtung der Sensoreinheiten und der übrigen Behälter durch die Behälterreinigungsmaschine verläuft, transportiert. Dies bedeutet, dass die Sensoreinheiten 231 bis 234 im Wesentlichen in unmittelbar zueinander benachbarten Behälterträgern verschiedener Gassen angeordnet sind und so durch die Behälterreinigungsmaschine transportiert werden. Dies ermöglicht das Aufzeichnen von Umgebungsdaten und/oder Betriebsdaten der Behälterreinigungsmaschine für alle Gassen zur selben Zeit, was zeitliche Fluktuation und damit Fehlinterpretationen der Daten weniger wahrscheinlich macht. Diese Ausführungsform ist besonders bevorzugt für solche Fälle, in denen die Sensoreinheiten 231 bis 234 fest in den Behälterträgern angeordnet sind, also nicht etwa im Auslauf 141 (siehe Figur 1) aus der Behälterreinigungsmaschine austreten und dem Einlauf 121 erst wieder zugeführt werden müssen.

Figur 2b zeigt eine dazu alternative Ausführungsform. In dieser Figur ist erneut eine Reihe von Behältern 130 dargestellt, die in den verschiedenen Gassen 110 zusammen mit Sensoreinheiten 231 bis 234 transportiert werden. Allerdings ist mit den Punkten 235 angedeutet, dass zwischen den aufeinanderfolgend dargestellten Reihen von Behältern weitere Reihen von Behältern transportiert werden können. Beispielsweise können zwischen der Reihe von Behältern mit der Sensoreinheit 231 und zwischen der Reihe von Behältern mit der Sensoreinheit 232 fünf weitere Reihen von Behältern durch den Reinigungsbereich 101 transportiert werden. Dies gilt für jede der Gassen 110. Zwischen der Reihe der Behälter mit Sensoreinheit 232 und der Reihe mit der Sensoreinheit 233 können dann beispielsweise ebenfalls fünf oder eine beliebige weitere Anzahl an Reihen von Behältern transportiert werden, beispielsweise 10. Die Abstände d₁ und d₂ dieser aufeinanderfolgend dargestellten Reihen von Behältern und damit auch der in verschiedenen Gassen transportierten Sensoreinheiten ist daher nicht notwendig gleich, sondern kann auch verschieden sein. Selbiges gilt für den Abstand d₃.

Bevorzugt sind jedoch Ausführungsformen, bei denen die Abstände d₁ bis d₃ im Wesentlichen gleich sind und beispielsweise zwischen den Reihen mit Sensoreinheiten keine Reihen mit Behältern ohne Sensoreinheit transportiert werden. In dieser Ausführungsform wird bevorzugt der Einlauf gestoppt (es werden also keine Behälter den Behälterträgern zugeführt, etwa indem der Einlauf durch eine physische Blockade gesperrt wird) und in eine leere, nicht mit Behältern befüllt Reihe von Behälterträgern werden die Sensoreinheiten eingebracht, sodass in jeder Gasse eine Sensoreinheit dieser Reihe positioniert ist. Es können auch mehrere unmittelbar aufeinanderfolgende Reihen von Behälterträgern so mit Sensoreinheiten ausgestattet werden. Sobald die Sensoreinheiten in den Behälterträgern positioniert wurden, kann der Flascheneinlauf wieder freigegeben werden und Behälter können den Behälterträgern zugeführt werden. Alternativ zum Beladen einer leeren Reihe von Behälterträgern mit Sensoreinheiten können die Sensoreinheiten auch fest in der Reihe von Behälterträgern montiert sein. In diesem Fall wird ebenfalls der Einlauf gestoppt, ein zusätzliches Einführen der Sensoreinheiten in die Behälterträger kann jedoch entfallen, da die Sensoreinheiten fest in den Behälterträgern montiert sind.

Während in den Figuren 2a und 2b nicht dargestellt, ist, wie oben beschrieben, auch eine Ausführungsform denkbar, bei der ein vollständig irregulärer und zufälliger Transport von Sensoreinheiten erfolgt. Dies ist insbesondere in Kombination mit einem Massentransporteur zum Zuführen von Behältern 130 zum Einlauf 121 der Behälterreinigungsmaschine (siehe Figur 1) möglich, wobei die Sensoreinheiten diesem Massentransporteur dann bevorzugt vor dem Einlauf 121 zugeführt werden, um eine zufällige Verteilung der Sensoreinheiten zu gewährleisten.

Figur 3 zeigt eine detaillierte Darstellung einer Sensoreinheit 131, wie sie in einer Behälteraufnahme 132 angeordnet sein kann. Die Sensoreinheit 131 ist hier "auf dem Kopf stehend" dargestellt. Weiterhin ist in der Nähe zu der Sensoreinheit 131 und der Behälteraufnahme 132 eine Reinigungsdüse 390 angeordnet, die hier beispielhaft ein Reinigungsmedium in Richtung des Mündungsbereichs der Sensoreinheit (analog zum Mündungsbereich eines Behälters) ausbringt.

Die in Figur 3 dargestellte Sensoreinheit ist als Flasche dargestellt, wie beispielsweise eine Wasserflasche oder eine Bierflasche. Alternativ kann die Sensoreinheit aber auch in Form einer Dose ausgestaltet sein, wenn die Behälterreinigungsmaschine insbesondere zum Reinigen von Dosen ausgebildet ist. Es ist bevorzugt, dass die Geometrie und/oder Form und/oder Masse und/oder Oberflächenkontur der Sensoreinheit möglichst der der in der Behälterreinigungsmaschine zu reinigenden Behältern entspricht. So kann gewährleistet werden, dass der Einfluss der Behältereinigungsmaschine auf die Sensoreinheit möglichst dem Einfluss, den die Behälterreinigungsmaschine auf die eigentlich zu reinigenden Behälter hat, ähnelt und somit die gewonnenen Daten (Umgebungsdaten und/oder Betriebsdaten) möglichst der Realität der zu reinigenden Behälter entsprechen.

In der hier dargestellten Ausführungsform umfasst die Sensoreinheit eine Reihe von Sensoren 381 bis 385. Beispielsweise kann ein Sensor 382 vorgesehen sein, der als Drucksensor ausgeführt ist und etwa den Druck des mit Hilfe der Reinigungsdüse 390 ausgebrachten Reinigungsmediums misst. Durch die Messung dieses Drucks kann beispielsweise bestimmt werden, ob die Reinigungsdüse ordnungsgemäß funktioniert. Ist der Druck zu niedrig oder zu hoch kann eine Fehlfunktion vorliegen.

Weiterhin können beispielsweise ein oder mehrere Temperatursensoren 384 und 385 vorgesehen sein, die die Umgebungstemperatur messen. Ein Feuchtigkeitssensor 383 kann vorgesehen sein, um die Luftfeuchte innerhalb der Behälterreinigungsmaschine zu messen. Weiterhin kann ein Sensor (schematisch auch mit 383 bezeichnet) vorgesehen sein, der die Luftzusammensetzung innerhalb der Behälterreinigungsmaschine (etwa an einem definierten Ort) messen kann. Beispielsweise kann dieser Luftzusammensetzungssensor eine Konzentration von H₂ innerhalb der Behälterreinigungsmaschine messen.

Überdies kann ein pH-Wert-Messsensor 381 vorgesehen sein, der den pH-Wert beispielsweise in einem Reinigungsbad und/oder einer auf den Behälter beaufschlagten Reinigungsflüssigkeit misst. Ferner kann ein Leitfähigkeitssensor (auch mit 381 bezeichnet) vorgesehen sein, der die Leitfähigkeit (oder Leitwert) der Luft und/oder innerhalb eines Reinigungsbades und/oder eines anderen mit einer Flüssigkeit beaufschlagten Bereichs innerhalb der Behälterreinigungsmaschine messen kann.

Sämtliche dieser Sensoren können beliebig kombiniert werden.

Weiterhin kann die Sensoreinheit eine Prozessoreinheit 396 umfassen, die beispielsweise über einen Speicher und einen Prozessor verfügt, die die Umgebungsdaten und/oder Betriebsdaten, die von den einzelnen Sensoren 381 bis 385 gemessen wurden, speichert und gegebenenfalls verarbeitet. Insbesondere kann der Prozessoreinheit auch eine interne Uhr zugeordnet sein, die es ermöglicht, jeden gemessenen Wert der Sensoren mit einer Zeit in Verbindung zu bringen. Dies kann die Rückverfolgung des gemessenen Wertes zu einer Position der Sensoreinheit in der Behälterreinigungsmaschine zu dem Zeitpunkt, bei dem dieser Wert gemessen wurde, ermöglichen. Damit kann beispielsweise auch bestimmt werden, in welchem Reinigungsbad oder in welchem Bereich der Behälterreinigungsmaschine dieser Wert gemessen wurde und beispielsweise mit Hilfe der Auswerteinrichtung entsprechend eine Steuerung der Behälterreinigungsmaschine etwa zum Unterbrechen des Betriebs der gesamten Behälterreinigungsmaschine oder der Gasse erfolgen.

Alternativ oder zusätzlich zu einer solchen Uhr kann der Prozessoreinheit 396 auch einen GPS-Sensor umfassen oder ein solcher kann der Sensoreinheit fest zugeordnet sein. Damit kann dann die Position der Sensoreinheit in der Behälterreinigungsmaschine bestimmt und den gemessenen Sensorwerten zugeordnet werden, um eine möglichst zielgerichtete Auswertung der mit der Sensoreinheit gewonnenen Sensordaten zu ermöglichen.

Die Datenübertragung mit Hilfe der Sensoreinheit kann beispielsweise über eine drahtlose Datenverbindung, wie eine Wireless-Datenverbindung oder dem 5G-Standard erfolgen. Dazu kann der Prozessoreinheit ein entsprechender Sender und/oder Transceiver zugeordnet sein, der zumindest ein Senden von Daten aber bevorzugt auch einen Empfangen von Daten und damit einen Austausch etwa mit der Auswerteinrichtung ermöglicht.

## Patentansprüche

1. Verfahren zum Überwachen des Betriebs einer Behälterreinigungsmaschine (100), wobei die Behälterreinigungsmaschine mehrere Behälter (130) gleichzeitig von einem Einlauf (121) zu einem Auslauf (141) der Behälterreinigungsmaschine mit Hilfe von Behälterträgern (132), die jeweils wenigstens einen Behälter (130) aufnehmen, in mehreren im wesentlichen parallel zueinander verlaufenden Gassen (110) transportiert, wobei das Verfahren umfasst, **dadurch gekennzeichnet,**
**dass** während des Betriebs der Behälterreinigungsmaschine zu jeder Zeit wenigstens zwei Sensoreinheiten (131) in Behälterträgern in verschiedenen Gassen durch die Behälterreinigungsmaschine transportiert werden und wobei die Sensoreinheiten Umgebungsdaten und/oder Betriebsdaten innerhalb der Behälterreinigungsmaschine überwachen;
wobei die Sensoreinheiten mit Mitteln zur Datenübertragung die Umgebungsdaten und/oder der Betriebsdaten an eine Auswerteinrichtung (172) übertragen, die die Umgebungsdaten und/oder die Betriebsdaten auswertet.

2. Verfahren nach Anspruch 1, wobei die Sensoreinheiten (131) in Form und/oder Gewicht den mit der Behälterreinigungsmaschine (100) gereinigten Behältern (130) entsprechen.

3. Verfahren nach Anspruch 1 oder 2, wobei zu jeder Zeit in einem Behälterträger (132) jeder Gasse (110) eine Sensoreinheit (131) durch die Behälterreinigungsmaschine (100) transportiert wird.

4. Verfahren nach Anspruch 3, wobei die Sensoreinheiten (131) in unmittelbar benachbarten Behälterträgern (132) und somit entlang einer Linie senkrecht zur Transportrichtung durch die Behälterreinigungsmaschine (100) transportiert werden oder wobei die Sensoreinheiten in Transportrichtung durch die Behälterreinigungsmaschine mit einem Abstand zueinander transportiert werden.

5. Verfahren nach einem der Ansprüche 1 bis 4, wobei die Auswerteinrichtung abhängig von der Auswertung den Betrieb einer Gasse unterbricht.

6. Verfahren nach Anspruch 5, wobei das Unterbrechen des Betriebs einer Gasse (110) das Sperren des Einlaufs (121) der Behälterreinigungsmaschine (100) für diese Gasse umfasst.

7. Verfahren nach einem der Ansprüche 1 bis 6, wobei die Sensoreinheiten (131) zur Energieversorgung einen Akkumulator umfassen, wobei der Akkumulator zumindest zeitweise während des Transports der Sensoreinheit durch die Behälterreinigungsmaschine (100) durch ein Mittel zum induktiven Aufladen des Akkumulators aufgeladen wird.

8. Verfahren nach einem der Ansprüche 1 bis 6, wobei eine Sensoreinheit in den Einlauf (121) der Behälterreinigungsmaschine (100) eingeschleust wird und im Auslauf (141) der Behälterreinigungsmaschine ausgeschleust wird, wobei die ausgeschleuste Sensoreinheit einer Wartungseinheit zugeführt wird, bevor die Sensoreinheit wieder in den Einlauf der Behälterreinigungsmaschine eingeschleust wird und wobei die Wartungseinheit Umgebungsdaten und/oder Betriebsdaten aus der Sensoreinheit ausliest und/oder einen Akkumulators der Sensoreinheit auflädt und/oder einen Speicher der Sensoreinheit leert.

9. Verfahren nach einem der Ansprüche 1 bis 8, wobei die Umgebungsdaten wenigstens eines von Temperatur, Feuchtigkeit, pH-Wert, Leitwert, Luftzusammensetzung umfassen und wobei Betriebsdaten wenigstens eines von Aktivität einer Düse, Füllstand eines Reinigungsbeckens der Behälterreinigungsmaschine, Ausbringdruck einer Reinigungsflüssigkeit aus einer Reinigungsdüse der Behälterreinigungsmaschine (100) umfassen.

10. Verfahren nach einem der Ansprüche 1 bis 9, wobei die Behälterreinigungsmaschine (100) wenigstens 8 oder wenigstens 10 oder wenigstens 12 Gassen (110) umfasst.

11. Behälterreinigungsmaschine (100) zum Reinigen von Behältern, mit einem Einlauf (121) und einem Auslauf (141) und einer Vielzahl von Behälterträgern (132), die in zueinander im wesentlichen parallelen Gassen (110) durch die Behälterreinigungsmaschine vom Einlauf zum Auslauf bewegt werden können, und wenigstens zwei Sensoreinheiten (131), wobei die Behälterträger ausgebildet sind, Behälter und wenigstens eine der Sensoreinheiten aufzunehmen, wobei die Behälterreinigungsmaschine eine Auswerteinrichtung (172) zum Auswerten von mittels einer der Sensoreinheiten gewonnenen Umgebungsdaten und/oder Betriebsdaten umfasst, und wobei die Behälterreinigungsmaschine ausgebildet ist, in Zusammenwirkung mit den wenigstens zwei Sensoreinheiten das Verfahren nach einem der Ansprüche 1 bis 10 durchzuführen.

12. Behälterreinigungsmaschine nach Anspruch 11, wobei die Auswerteinrichtung ausgebildet ist, eine Gasse abhängig von der Auswertung der Umgebungsdaten und/oder Betriebsdaten zu sperren.

13. Behälterreinigungsmaschine (100) nach Anspruch 11 oder 12, wobei die Behälterreinigungsmaschine eine Wartungseinheit zum Aufnehmen einer Sensoreinheit (131) umfasst, wobei die Wartungseinheit Umgebungsdaten und/oder Betriebsdaten aus einer Sensoreinheit auslesen und/oder einen Akkumulators der Sensoreinheit aufladen und/oder einen Speicher der Sensoreinheit leeren kann.

14. Behälterreinigungsmaschine (100) nach einem der Ansprüche 11 bis 13, wobei die Behälterreinigungsmaschine wenigstens 8 oder wenigstens 10 oder wenigstens 12 Gassen (110) umfasst.

15. Behälterreinigungsmaschine (10) nach Anspruch 14, wobei die Gassen (110) parallel verlaufen und vom Einlauf (121) bis zum Auslauf (141) auf derselben oder auf verschiedenen Höhen verlaufen.

## Claims

1. A method for monitoring the operation of a container cleaning machine (100), wherein the container cleaning machine simultaneously conveys a plurality of containers (130) from an inlet (121) to an outlet (141) of the container cleaning machine using container carriers (232) each receiving at least one container (130) through a plurality of substantially parallel passages (110), wherein the method is **characterized in that**
in operation of the container cleaning machine at any time at least two sensor units (131) in container carriers are conveyed via different passages through the container cleaning machine and wherein the sensor units monitor environment data and/or operating data within the container cleaning machine;
wherein the sensor units by means of data communication devices transmit the environment data and/or the operating data to an evaluation device (172) that evaluates the environment data and/or the operating data.

2. The method according to claim 1, wherein the sensor units (131) match the containers (130) cleaned by the container cleaning machine (100) with regard to shape and/or weight.

3. The method according to claims one or 2, wherein at any time in a container carrier (132) of each passage one sensor unit (131) is conveyed through the container cleaning machine (100).

4. The method according to claim 3, wherein the sensor units (131) are conveyed in container carriers (132) immediately adjacent to each other and thus along a line perpendicular to the transport direction through the container cleaning machine (100) and wherein the sensor units are conveyed spaced from each other in the transport direction through the container cleaning machine.

5. The method according to anyone of claims 1 to 4, wherein the evaluation device interrupts operation in a passage according to the evaluation.

6. The method according to claim 5, wherein interrupting the operation in a passage (110) comprises blocking the inlet (121) of the container cleaning machine (100) for the respective passage.

7. The method according to anyone of claims 1 to 6, wherein the sensor units (131) comprise a battery for power supply, wherein the battery is, at least temporarily, charged during the transport of the sensor unit through the container cleaning machine (100) by means for inductive charging of the battery.

8. The method according to anyone of claims 1 to 6, wherein a sensor unit is introduced into the inlet (121) of the container cleaning machine (100) and discharged via the outlet (141) of the container cleaning machine, wherein the discharged sensor unit is supplied to a maintenance unit before the sensor unit is reintroduced into the inlet of the container cleaning machine, and wherein the maintenance unit reads environment data and/or operating data from the sensor unit and/or recharges a battery of the sensor unit and/or clears a memory of the sensor unit.

9. The method according to anyone of claims 1 to 8, wherein the environment data comprise at least one of temperature, humidity, pH value, conductance, air composition, and wherein operating data comprise at least one of activity of a nozzle, filling level of a cleaning basin of the container cleaning machine, discharge pressure of a cleaning agent via a cleaning nozzle of the container cleaning machine (100).

10. The method according to anyone of claims 1 to 9, wherein the container cleaning machine (100) comprises at least eight or preferably at least 10 or more preferably at least 12 passages (110).

11. A container cleaning machine (100) for cleaning containers including an inlet (121) and an outlet (141) and a plurality of container carriers (132) that can be moved through the container cleaning machine from the inlet to the outlet via passages (110) substantially parallel to each other, and at least two sensor units (131), wherein the container carriers are configured to receive containers and at least one of the sensor units, wherein the container cleaning machine comprises an evaluation device (172) for evaluating environment data and/or operating data obtained by means of one of the sensor units, and wherein the container cleaning machine is configured to carry out the method according to anyone of claims 1 to 10 in cooperation with the at least two sensor units.

12. The container cleaning machine according to claim 11, wherein the evaluation device is configured to block a passage according to the evaluation of the environment data and/or operating data.

13. The container cleaning machine (100) according to claims 11 or 12, wherein the container cleaning machine comprises a maintenance unit for receiving a sensor unit (131), wherein the maintenance unit enables reading environment data and/or operating data from a sensor unit and/or charging a battery of the sensor unit and/or clearing a memory of the sensor unit.

14. The container cleaning machine (100) according to anyone of claims 11 to 13, wherein the container cleaning machine comprises at least eight or preferably at least 10 or more preferably at least 12 passages (110).

15. The container cleaning machine (100) according to claim 14, wherein the passages (110) extend parallel to each other and run at the same height or at different heights from the inlet (121) to the outlet (141).

## Revendications

1. Procédé de surveillance du fonctionnement d'une machine de nettoyage de récipients (100), dans lequel la machine de nettoyage de récipients transporte, sur plusieurs voies (110) s'étendant de manière essentiellement parallèle les unes aux autres, plusieurs récipients (130) simultanément d'une entrée (121) jusqu'à une sortie (141) de la machine de nettoyage de récipients à l'aide de supports de récipient (132) qui accueillent respectivement au moins un récipient (130), **caractérisé en ce que**
pendant le fonctionnement de la machine de nettoyage de récipients, au moins deux unités de capteur (131) sont transportées à tout moment dans des supports de récipient sur des voies différentes à travers la machine de nettoyage de récipients, et les unités de capteur surveillent des données d'environnement et/ou des données de fonctionnement à l'intérieur de la machine de nettoyage de récipients ;
les unités de capteur transmettent, grâce à des moyens de transmission de données, les données d'environnement et/ou les données de fonctionnement à un dispositif d'évaluation (172) qui évalue les données d'environnement et/ou les données de fonctionnement.

2. Procédé selon la revendication 1, dans lequel les unités de capteur (131) correspondent en forme et/ou en poids aux récipients (130) nettoyés par la machine de nettoyage de récipients (100).

3. Procédé selon la revendication 1 ou 2, dans lequel une unité de capteur (131) est transportée à tout moment dans un support de récipient (132) de chaque voie (110) à travers la machine de nettoyage de récipients (100).

4. Procédé selon la revendication 3, dans lequel les unités de capteur (131) sont transportées à travers la machine de nettoyage de récipients (100) dans des supports de récipient (132) immédiatement adjacents et donc le long d'une ligne perpendiculaire à la direction de transport ou dans lequel les unités de capteur sont transportées à travers la machine de nettoyage de récipients dans la direction de transport à une certaine distance les unes des autres.

5. Procédé selon l'une quelconque des revendications 1 à 4, dans lequel le dispositif d'évaluation interrompt le fonctionnement d'une voie en fonction de l'évaluation.

6. Procédé selon la revendication 5, dans lequel l'interruption du fonctionnement d'une voie (110) comprend le blocage de l'entrée (121) de la machine de nettoyage de récipients (100) pour ladite voie.

7. Procédé selon l'une quelconque des revendications 1 à 6, dans lequel les unités de capteur (131) comprennent un accumulateur en vue de leur alimentation en énergie, dans lequel l'accumulateur est chargé au moins temporairement pendant le transport de l'unité de capteur à travers la machine de nettoyage de récipients (100) grâce à un moyen permettant de charger l'accumulateur par induction.

8. Procédé selon l'une quelconque des revendications 1 à 6, dans lequel une unité de capteur est introduite dans l'entrée (121) de la machine de nettoyage de récipients (100) et est évacuée par la sortie (141) de la machine de nettoyage de récipient, dans lequel l'unité de capteur évacuée est amenée à une unité de maintenance avant que l'unité de capteur ne soit à nouveau introduite dans l'entrée de la machine de nettoyage de récipients et dans lequel l'unité de maintenance lit des données d'environnement et/ou des données de fonctionnement issues de l'unité de capteur et/ou charge un accumulateur de l'unité de capteur et/ou vide une mémoire de l'unité de capteur.

9. Procédé selon l'une quelconque des revendications 1 à 8, dans lequel les données d'environnement comprennent au moins un paramètre parmi la température, l'humidité, le pH, la conductivité, la composition de l'air et dans lequel les données de fonctionnement comprennent au moins un paramètre parmi l'activité d'une buse, le niveau de remplissage d'un bassin de nettoyage de la machine de nettoyage de récipient, la pression d'application d'un liquide de nettoyage à partir d'une buse de nettoyage de la machine de nettoyage de récipients (100).

10. Procédé selon l'une quelconque des revendications 1 à 9, dans lequel la machine de nettoyage de récipients (100) comprend au moins 8 ou au moins 10 ou au moins 12 voies (110).

11. Machine de nettoyage de récipients (100) permettant de nettoyer des récipients, comprenant une entrée (121) et une sortie (141) et une pluralité de supports de récipient (132) qui peuvent être déplacés de l'entrée jusqu'à la sortie sur des voies (110) essentiellement parallèles les unes aux autres à travers la machine de nettoyage de récipients, et au moins deux unités de capteur (131), dans laquelle les supports de récipient sont conçus pour accueillir des récipients et au moins une des unités de capteur, dans laquelle la machine de nettoyage de récipients comprend un dispositif d'évaluation (172) permettant d'évaluer des données d'environnement et/ou des données de fonctionnement obtenues au moyen d'une des unités de capteur, et dans laquelle la machine de nettoyage de récipients est conçue pour mettre en œuvre le procédé selon l'une quelconque des revendications 1 à 10 en coopération avec les au moins deux unités de capteur.

12. Machine de nettoyage de récipients selon la revendication 11, dans laquelle le dispositif d'évaluation est conçu pour bloquer une voie en fonction de l'évaluation des données d'environnement et/ou des données de fonctionnement.

13. Machine de nettoyage de récipients (100) selon la revendication 11 ou 12, dans laquelle la machine de nettoyage de récipients comprend une unité de maintenance permettant d'accueillir une unité de capteur (131), dans laquelle l'unité de maintenance peut lire des données d'environnement et/ou des données de fonctionnement issues d'une unité de capteur et/ou charger un accumulateur de l'unité de capteur et/ou vider une mémoire de l'unité de capteur.

14. Machine de nettoyage de récipients (100) selon l'une quelconque des revendications 11 à 13, dans laquelle la machine de nettoyage de récipients comprend au moins 8 ou au moins 10 ou au moins 12 voies (110).

15. Machine de nettoyage de récipients (10) selon la revendication 14, dans laquelle les voies (110) s'étendent parallèlement et s'étendent de l'entrée (121) jusqu'à la sortie (141) à la même hauteur ou à des hauteurs différentes.
